# EUROPÄISCHE PATENTSCHRIFT

(11) **EP 3 591 765 B1**
(45) Veröffentlichungstag und Bekanntmachung des Hinweises auf die Patenterteilung: **01.11.2023**
(21) Anmeldenummer: 18181114.2
(22) Anmeldetag: 02.07.2018
(51) Int. Cl.: H01R 4/48, H02G 3/12

(54) **LEITERKLEMMVORRICHTUNG FÜR ELEKTRISCHE LEITER**
CONDUCTOR CLAMPING ELEMENT FOR ELECTRIC CONDUCTORS
DISPOSITIF DE SERRAGE DE CONDUCTEUR POUR CONDUCTEURS ÉLECTRIQUES

(43) Veröffentlichungstag der Anmeldung: 08.01.2020
(73) Patentinhaber: GIRA GIERSIEPEN GmbH & Co. KG, 42477 Radevormwald (DE)
(72) Erfinder: KALINKE, Jens, 42499 Hückeswagen (DE)
(74) Vertreter: Dr. Solf & Zapf Patent- und Rechtsanwalts PartG mbB

(56) Entgegenhaltungen:
- EP-A1- 0 908 965
- EP-A1- 3 182 519
- EP-B1- 3 107 111
- DD-A1- 217 938
- DE-A1-102004 001 202

## Beschreibung

Die vorliegende Erfindung betrifft eine Leiterklemmvorrichtung gemäß dem Oberbegriff des Anspruchs 1.

Eine derartige Leiterklemmvorrichtung ist aus der EP 3 182 519 A1 bekannt. Bei einer derartigen bekannten Leiterklemmvorrichtung hat sich herausgestellt, dass sie gut geeignet ist für die Kontaktierung starrer eindrähtiger Leiter oder starrer mehrdrähtiger Leiter. Jedoch für die Kontaktierung flexibler mehrdrähtiger Litzenleiter kann keine sichere Funktionsweise gewährleistet werden, vielmehr kommt es hierbei zu Fehlfunktionen innerhalb der Leiterklemmvorrichtung. Zudem ergeben sich Schwierigkeiten beim mehrfachen Einstecken derselben Leiterenden.

DE 10 2004 001202 A1 betrifft eine Leiterklemmvorrichtung des Stands der Technik zur klemmenden Kontaktierung mindestens eines mehrdrähtigen elektrischen Leiters umfassend ein Kontaktgehäuse und eine Klemmfeder.

Der Erfindung liegt die Aufgabe zugrunde, ausgehend von einer bekannten Leiterklemmvorrichtung diese derart zu verbessern, dass elektrische Leiter, die aus flexiblen Litzenleitern zusammengesetzt sind, sicher und wiederholbar kontaktiert werden können.

Erfindungsgemäß wird diese Aufgabe mittels einer Leiterklemmvorrichtung mit den Merkmalen des Anspruchs 1 gelöst. Hierbei ist erfindungsgemäß vorgesehen, dass sich an den Klemmbereich ein in Einsteckrichtung hinterer Endbereich anschließt, und dieser eine Leiteranlage aufweist, die in ihrer Querschnittsform an die Leiteranlage des Einsteckbereiches angepasst ist, und die Abwinklungen im Endbereich an ihrem freistehenden Ende derart verlängert ausgebildet sind, dass sich im Endbereich die Abwinklungen in Richtung des Gehäusebodens mindestens über die Hälfte der Höhe des eingesteckten und geklemmten Leiters mit maximal zulässigem Durchmesser erstrecken. Durch die Ausbildung eines derartigen Endbereiches wird sichergestellt, dass aufgrund der im Klemmbereich wirkenden Anpresskraft auf den mehrdrähtigen elektrischen Leiter sich dieser nicht im Endbereich derart aufgrund einer Verschiebung der einzelnen Leiterdrähte bzw. Leiterlitzen auffächern kann. Diese insbesondere in Richtung des Gehäusebodens verlängerte Abwinklung stellt sicher, dass mindestens über die Hälfte des Durchmesserbereichs des elektrischen Leiters im Endbereich eine seitliche Führung derart vorhanden ist, dass eine Verschiebung der einzelnen Leiterdrähte bzw. Leiterlitzen in Richtung auf den benachbarten elektrischen Leiter verhindert wird. Da der elektrische Leiter auch im Endbereich aufgrund der seitlichen Führung und Begrenzung nur einer geringen Verformung aufgrund der im Klemmbereich wirkenden Anpresskraft unterworfen ist, kann auch nach einem Lösen des elektrischen Leiters aus der Leiterklemmvorrichtung dieser erneut ohne Schwierigkeiten eingesteckt werden.

Erfindungsgemäß sind weiterhin die V-förmigen Abwinklungen im Einsteckbereich, im Klemmbereich und im Endbereich aus zwei V-Schenkeln gebildet, die einen Winkel größer oder gleich 90°, insbesondere von 90° einschließen, und der gegenseitige Abstand der Enden der V-Schenkel im Bereich des Einsteckbereiches und des Klemmbereiches einen Abstand gleich einem maximal zulässigen Durchmesser des elektrischen Leiters besitzt. Der gegenseitige Abstand der Enden der V-Schenkel im Endbereich weist einen Abstand auf, der größer dem maximal zulässigen Durchmesser des mehrdrähtigen elektrischen Leiters ist. Der maximal zulässige Durchmesser ist erfindungsgemäß derjenige Durchmesser, der für einen für die jeweilige Leiterklemmvorrichtung zugelassenen Durchmesserbereich festgelegt ist, wobei dieser Durchmesserbereich einen minimalen Durchmesser und einen maximalen Durchmesser definiert. Dabei wird der maximale Durchmesser insbesondere im Einsteckbereich durch den Abstand des am freien Ende der Abwinklung angeformten Verlängerungsabschnitts zu der mit der Abwinklung verbundenen Gehäusewand bestimmt. Durch diese erfindungsgemäße Ausbildung wird erreicht, dass stets zwei Anlagebereiche innerhalb der V-förmigen Anlage vorhanden sind, und gleichzeitig wird eine kompakte Bauweise sichergestellt.

Erfindungsgemäß kann es weiterhin von Vorteil sein, dass ein im Endbereich an der Abwinklung angeformter Verlängerungsabschnitt parallel zu den Gehäusewänden und vorzugsweise senkrecht in Richtung des Gehäusebodens und vorzugsweise in einem Abstand größer dem maximal zulässigen Durchmesser des elektrischen

Leiters verläuft. Der Verlängerungsabschnitt verbessert die seitliche Führung des Leiters im Endbereich und verhindert zusätzlich ein Aufspreizen der Litzen. Der größere Durchmesser verhindert ein Anstoßen des Leiters gegen eine Stirnwand des Verlängerungsabschnitts im Endbereich beim Einführvorgang des Leiters.

Weiterhin ist von Vorteil, wenn der jeweilige Verlängerungsabschnitt des Endbereichs derart ausgebildet ist, dass er sich in Richtung des Gehäusebodens mindestens über die Hälfte der Höhe eines eingeführten und geklemmten Leiters mit maximal zulässigem Durchmesser erstreckt. Hierdurch wird eine Verschiebung der flexiblen Litzen seitlich über den Verlängerungsabschnitt erschwert.

Erfindungsgemäß ist es weiterhin von Vorteil, wenn im Bereich des Klemmbereichs am freien Ende der jeweiligen Abwinklung eine randoffene Ausnehmung derart ausgebildet ist, dass der jeweilige wirksame Federschenkel der Klemmfeder den eingesteckten elektrischen Leiter im gesamten zulässigen Durchmesserbereich des elektrischen Leiters sicher kontaktiert. Da beidseitig des Klemmbereichs erfindungsgemäß eine Führung des elektrischen Leiters gewährleistet ist, kann die randoffene Ausnehmung nicht zu einer Verschiebung der einzelnen Leiterlitzen führen.

Weiterhin ist es erfindungsgemäß von Vorteil, wenn im Klemmbereich oder im Übergangsbereich zwischen Einsteckbereich und Klemmbereich in der jeweiligen Abwinklung eine in Richtung des Gehäusebodens ragende Kontaktkerbe derart ausgebildet ist, dass sie sich in den eingesteckten elektrischen Leiter einprägt. Durch diese Kontaktkerbe wird insbesondere die elektrische Kontaktierung verbessert.

Erfindungsgemäß ist es weiterhin von Vorteil, wenn als Material für das Kontaktgehäuse eine Kupfer- Legierung wie zum Beispiel CuZn5 oder CuSn0, 15 verwendet wird.

Weiterhin betrifft die Erfindung einen Sockel für ein elektrisches Installationsgerät gemäß dem Anspruch 9.

Anhand der in den beiliegenden Zeichnungen dargestellten Ausführungsbeispiele wird die Erfindung näher erläutert. Es zeigen:
- Fig. 1: eine perspektivische Ansicht einer erfindungsgemäßen Leiterklemmvorrichtung mit eingesteckten elektrischen Leitern,
- Fig. 2: eine Ansicht Richtung des Pfeils II in Fig. 1,
- Fig. 3: einen Längsschnitt entlang der Schnittlinie III-III in Fig. 2,
- Fig. 4: eine perspektivische Ansicht einer erfindungsgemäßen Leiterklemmvorrichtung ohne eingesteckte elektrische Leiter,
- Fig. 5: eine perspektivische Ansicht einer alternativen Ausführungsform einer erfindungsgemäßen Leiterklemmvorrichtung ohne eingesteckte elektrische Leiter,
- Fig. 6: eine Ansicht gemäß dem Pfeil VI in Fig. 5 und
- Fig. 7: eine Explosionsansicht eines Sockels eines elektrischen Installationsgerätes gemäß der Erfindung.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

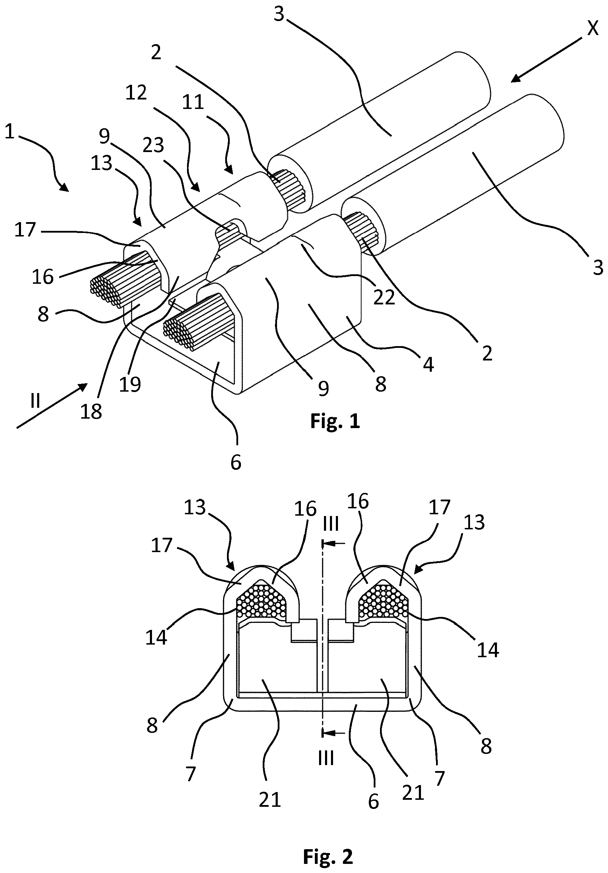

In Fig. 1 ist eine erfindungsgemäße Leiterklemmvorrichtung 1 mit zwei eingeschobenen elektrischen Leitern 2 jeweils einer isolierten elektrischen Leitung 3 dargestellt. Die elektrischen Leiter 2 sind vorzugsweise als flexible Litzenleiter ausgebildet und werden aus miteinander verseilten und/oder unverseilten Litzendrähten gebildet.

Die Leiterklemmvorrichtung 1 umfasst ein Kontaktgehäuse 4 aus einem elektrisch leitenden Material, wie beispielsweise Kupfer oder einer Kupfer-Legierung.

Das Kontaktgehäuse 4 weist einen Gehäuseboden 6 auf, an dessen Bodenlängsrändern 7 Gehäusewände 8 jeweils angeformt sind. Diese Gehäusewände 8 verlaufen vorzugsweise rechtwinklig gleichgerichtet zum Gehäuseboden 6 und parallel zueinander und besitzen vorzugsweise dieselbe Höhe. An ihren freien Enden weisen die Gehäusewände 8 Abwinklungen 9 auf, die vorzugsweise aufeinander zu abgewinkelt sind. Diese Abwinklungen 9 bilden mit den zugehörigen Gehäusewänden 8 jeweils einen in Einsteckrichtung X des Leiters 2 ersten Einsteckbereich 11, einen sich daran anschließenden Klemmbereich 12 und einen sich an diesen anschließenden Endbereich 13. Somit weist die erfindungsgemäße Leiterklemmvorrichtung 1 vorzugsweise zwei nebeneinanderliegende Aufnahmen zum Kontaktieren zweier elektrischer Leiter 2 auf.

Die Abwinklungen 9 sind derart geformt, dass sie im Einsteckbereich 11, im Klemmbereich 12 und im Endbereich 13 für den eingesteckten elektrischen Leiter 2 eine Leiteranlage bilden, die im Querschnitt senkrecht zu einer in Einsteckrichtung X verlaufenden Längsachse gesehen V-förmig ausgebildet ist, so dass für den eingesteckten elektrischen Leiter 2 zwei Anlagebereiche 14 innerhalb der V-förmigen Anlage vorhanden sind. Diese V-förmige Leiteranlage wird aus zwei einander gegenüberliegenden V-Schenkeln 16, 17 gebildet, die miteinander einen Winkel vorzugsweise ≥ 90°, insbesondere von 90° einschließen. Die V-Schenkel 16, 17 besitzen an ihren freien Enden einen gegenseitigen Abstand, der gleich einem maximalen Durchmesser eines Durchmesserbereiches der elektrischen Leiter 2 ist, für den die jeweilige Leiterklemmvorrichtung 1 ausgelegt ist, wobei dieser Durchmesserbereich von einem minimal zulässigen Durchmesser des elektrischen Leiters 2 und einem maximal zulässigen Durchmesser des elektrischen Leiters 2 definiert wird. Hierbei ist der Abstand im Bereich des Einsteckbereiches 11 und des Klemmbereiches 12 gleich groß wie der maximal mögliche Durchmesser des jeweils vorgegebenen zulässigen Durchmesserbereiches.

Der Abstand im Endbereich 13 ist größer als der maximal zulässige Durchmesser des elektrischen Leiters 2. In diesem Fall ist ein sicheres Einstecken des elektrischen Leiters 2 auch dann möglich, wenn der elektrische Leiter 2 nicht genau geradlinig eingesteckt wird.

Erfindungsgemäß schließt sich im Einsteckbereich 11 und vorzugsweise auch im Klemmbereich 12 an den freien Enden der Abwinklungen 9 jeweils ein Verlängerungsabschnitt 18 zur Führung des Leiters 2 angeformt an. Insbesondere verläuft der Verlängerungsabschnitt 18 in Richtung auf den Gehäuseboden (6) parallel zu den Gehäusewänden (8). Der jeweilige Verlängerungsabschnitt 18 verläuft insbesondere parallel zu den Gehäusewänden 8 und ist in Richtung auf den Gehäuseboden 6 abgewinkelt.

Erfindungsgemäß sind die Abwinklungen 9 im Endbereich 13 an ihrem freistehenden Ende derart verlängert ausgebildet, dass sich im Endbereich 13 die Abwinklungen 9 in Richtung des Gehäusebodens 6 mindestens über die Hälfte der Höhe des eingesteckten und geklemmten Leiters 2 mit maximal zulässigem Durchmesser erstrecken. Vorzugsweise ist dafür der freistehende V-Schenkel 17 der Abwinklung 9 im Endbereich 13 verlängert ausgebildet und/oder weist einen in Richtung des Gehäusebodens 6 parallel zu der Gehäusewand 8 verlaufenden Verlängerungsabschnitt 18 auf. Vorzugsweise verläuft der Verlängerungsabschnitt 18 im Endbereich 13 parallel zu den Gehäusewänden 8 in einem Abstand größer dem maximal zulässigen Durchmesser des elektrischen Leiters.

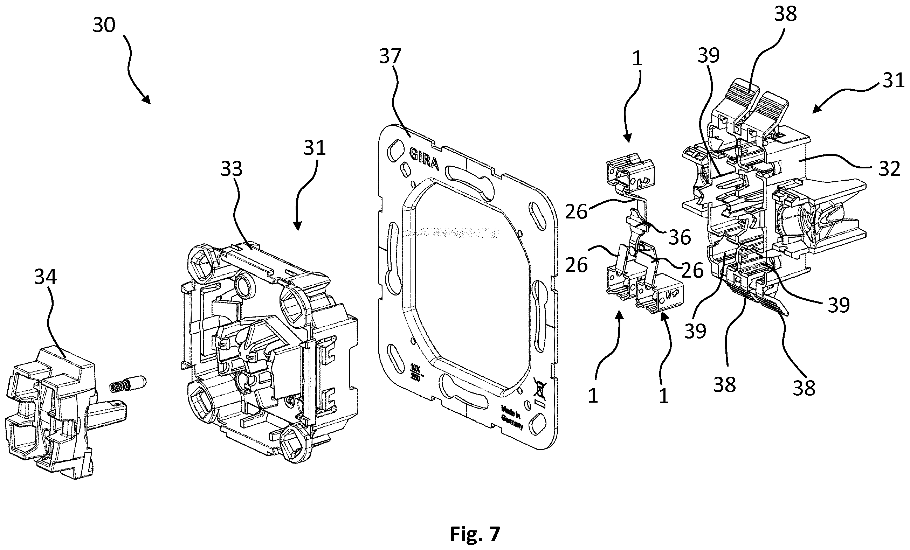

Erfindungsgemäß ist somit der Endbereich 13 insbesondere in Bezug auf seine Ausbildung im Querschnitt an die Form des Einsteckbereiches 11 angepasst. Im Bereich des Klemmbereiches 12 ist auf dem Gehäuseboden 6 eine Klemmfeder 19 befestigt, die insbesondere als Schenkelfeder ausgebildet ist, wobei zum Beispiel zwei parallel nebeneinanderliegende Schenkelfedern vorhanden sind. Mittels der Federkraft der Klemmfeder 19 wird durch Anlage der Federschenkel 21 an den eingesteckten elektrischen Leiter 2 dieser in den Raum zwischen den V-Schenkeln 16, 17 hineingedrückt und somit wird eine sichere elektrische Kontaktierung in den jeweils vorhandenen Anlagebereichen sichergestellt. Weiterhin ist es hierbei von Vorteil, wenn im Klemmbereich 12 oder am Übergang zwischen dem Einsteckbereich 11 und dem Klemmbereich 12 innerhalb der Abwinklung 9 eine oder mehrere in Richtung des Gehäusebodens 6 ragende Kontaktkerben 22 ausgebildet ist, die sich in den elektrischen Leiter 2 einprägen kann. Durch die Formgebung der Klemmfeder 19 kann der elektrische Leiter 2 von Hand in die Leiterklemmvorrichtung 1 eingesteckt werden. Das Lösen erfolgt über einen in Fig. 7 dargestellten Lösehebel, der geeignet ist, die Kontaktfeder 19 aus ihrer Anpressstellung herauszubewegen, und zwar in Richtung auf den Gehäuseboden 6, so dass diese keine Anpresskraft mehr ausüben kann.

Wie weiterhin aus den Figuren zu entnehmen ist, sind zweckmäßigerweise im Bereich des Klemmbereiches 12 in den Abwinklungen 9 randoffene Ausnehmungen 23 ausgebildet. Durch diese Ausnehmungen 23 wird erreicht, und diese sind derart dimensioniert, dass die Klemmfeder 19 mit ihren Federschenkeln 21 bei jedem zulässigen Durchmesser im vorgegebenen Durchmesserbereich des elektrischen Leiters 2 eine sichere Anlageposition einnehmen kann.

Die erfindungsgemäße Ausgestaltung der Leiterklemmvorrichtung 1 verhindert, dass ein flexibler, aus einzelnen Leiterdrähten bzw. Leiterlitzen gebildeter elektrischer Leiter 2 sich - bedingt durch die Anpresskraft der Klemmfeder 19 im Klemmbereich 12 - im Bereich des Endbereiches 13 ungeregelt aufspreizen bzw. auffächern kann. Ein Aufspreizen der Leiterenden des elektrischen Leiters 2 würde ein Herausziehen der elektrischen Leiter 2 und ein dann erneutes Einstecken wesentlich erschweren. Zudem könnte hierdurch eine sichere Kontaktierung beeinträchtigt werden.

Um eine sichere seitliche Führung des elektrischen Leiters 2 insbesondere im Endbereich 13 zu gewährleisten, ist es erfindungsgemäß von Vorteil, wenn die Höhe der Verlängerungsabschnitte 18 kleiner/gleich, insbesondere gleich dem Durchmesser des elektrischen Leiters 2 ist.

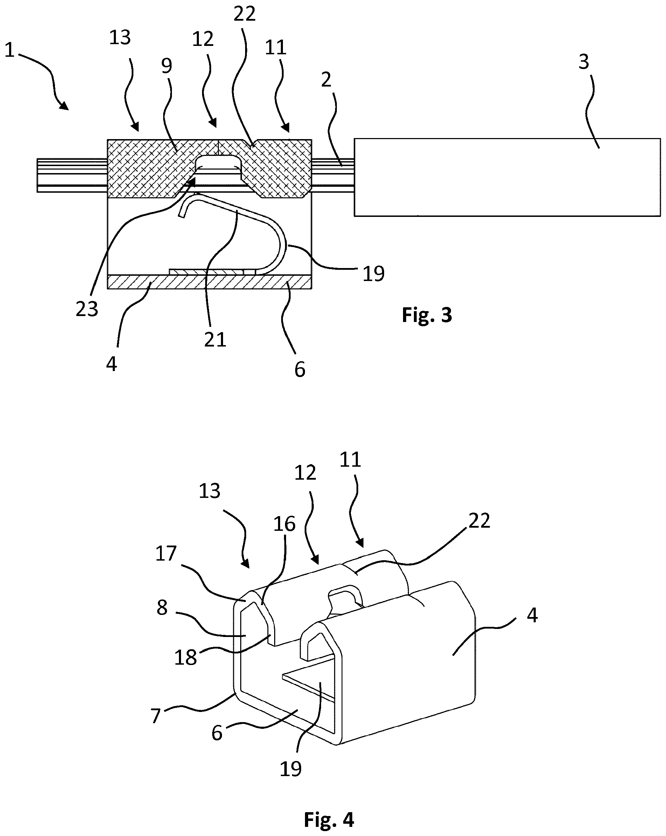

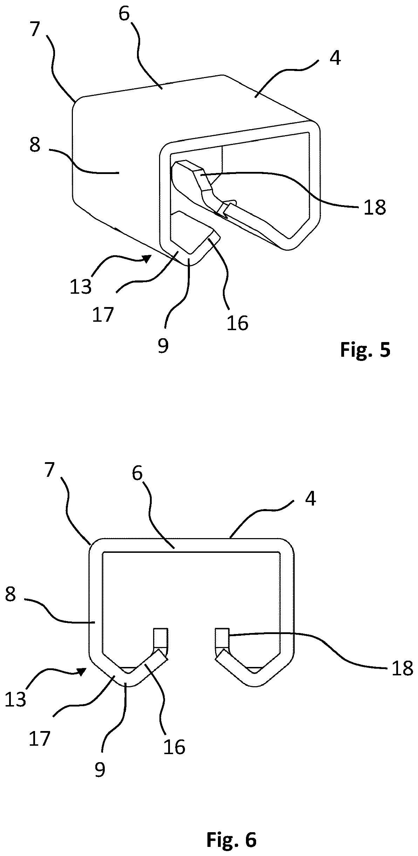

In den Figuren 5 und 6 ist eine Abwandlung der erfindungsgemäßen Leiterkontaktvorrichtung Leiterklemmvorrichtung 1 gegenüber der Ausführung, wie in den Figuren 1 bis 4 gezeigt, dargestellt. Hierbei sind gleiche Teile, wie zu den Figuren 1 bis 4 beschrieben, mit denselben Bezugsziffern gekennzeichnet. Der Unterschied zu der Ausführung gemäß den Figuren 1 bis 4 liegt darin, dass die Abwinklungen 9 im Endbereich 13 keinen Verlängerungsabschnitt 18 aufweisen. Demnach besitzen die Abwinklungen 9 im Endbereich 13 nur ein V-förmiges Querschnittsprofil, wie zu den Figuren 1 bis 4 beschrieben.

Die erfindungsgemäße Leiterklemmvorrichtung 1 ist vorzugsweise als Stanzbiegeteil ausgebildet. Die Klemmfeder 19 ist vorzugsweise aus Federstahl, insbesondere mit der Werkstoff Nummer 1.4310 hergestellt, wodurch die Federkraft der Klemmfeder 19 optimiert werden kann.

In Fig. 7 ist ein elektrisches Installationsgerät 30 gemäß der Erfindung dargestellt. Hierbei handelt es sich vorteilhafterweise um eine elektrische Schaltvorrichtung. Im dargestellten Ausführungsbeispiel handelt es sich zum Beispiel um einen Ein-Fachwechselschalter mit drei Leiterklemmvorrichtungen 1, die im Vorstehenden beschrieben sind.

Das Installationsgerät 30 umfasst einen Sockel 31, der zum Beispiel aus einem Sockelunterteil 32 und einem Sockeloberteil 33 gebildet ist, die insbesondere unlösbar miteinander verbunden sind, zum Beispiel über eine Schnappverbindung. An der von dem Sockelunterteil 32 abgewandten Seite des Sockeloberteils 33 ist eine Schaltwippe 34 schwenkbar gelagert. Die Schaltwippe 34 dient zur Erzeugung einer mechanischen Schaltbewegung, die auf eine Kontaktwippe 36 übertragen wird. Die Kontaktwippe 36 besteht aus elektrisch leitendem Material. Die Kontaktwippe 36 ist zweckmäßigerweise in einem Bereich zwischen den miteinander verbundenen Sockelunterteil 32 und Sockeloberteil 33 in einer entsprechenden Ausnehmung schwenkbar gelagert und dient zur elektrischen Kontaktierung der Leiterklemmvorrichtungen 1, die vorteilhafterweise am Rand ihres Gehäusebodens 6 in ihrem Endbereich 13 angeformte Kontaktarme 26 aufweisen. Diese Kontaktarme 26 werden in Abhängigkeit von der Wippenstellung der Kontaktwippe 36 kontaktiert.

Weiterhin umfasst zweckmäßigerweise das Installationsgerät 30 einen Tragring 37. Dieser Tragring 37 dient zur Montage des Installationsgerätes 30 in einer Montageöffnung zum Beispiel in einer Montagedose. Der Tragring 37 ist mit dem Sockeloberteil 33 verbunden, was nicht dargestellt ist.

An dem Sockelunterteil 33 sind Lösehebel 38 schwenkbar, insbesondere über angeformte Filmscharniere befestigt. Diese Lösehebel 38 sind insbesondere am Außenumfang jeder Leiterklemmvorrichtung 1 angeordnet. Die Leiterklemmvorrichtungen 1 sind in Kontaktaufnahmeöffnungen 39 angeordnet. Im dargestellten Beispiel sind drei Leiterklemmvorrichtungen 1 vorhanden. Hierbei sind die übereinanderliegenden Leiterklemmvorrichtungen 1 derart ausgerichtet, dass ihre Gehäuseböden 6 gegenüberliegend sind. Die Lösehebel 38 sind derart beweglich mit dem Sockelunterteil 32 im Bereich der jeweiligen Kontaktaufnahmeöffnung 39 angeordnet, dass sie mit einem Fortsatz durch eine Öffnung im Sockelunterteil 32 stoßen können, so dass die Klemmfeder 19 innerhalb des Kontaktgehäuses 4 derart zusammengedrückt wird, dass ihre Klemmstellung aufgehoben wird und ein eingestecktes, durch die Klemmfeder 19 eingeklemmtes Leiterende eines elektrischen Leiters 2 herausgezogen werden kann. Was die Ausbildung des elektrischen Installationsgerätes 30 im Übrigen betrifft, so wird auf die EP 3 107 111 B1 der Anmelderin hingewiesen und im vollen Umfang die darin beschriebenen Gestaltungsmerkmale auch für das erfindungsgemäße Installationsgerät beansprucht.

### Bezugszeichenliste

- 1: Leiterklemmvorrichtung
- 2: Leiter
- 3: Leitung
- 4: Kontaktgehäuse
- 6: Gehäuseboden
- 7: Bodenlängsrand
- 8: Gehäusewand
- 9: Abwinklung
- 11: Einsteckbereich
- 12: Klemmbereich
- 13: Endbereich
- 14: Anlagebereich
- 16: V-Schenkel
- 17: V-Schenkel
- 18: Verlängerungsabschnitt
- 19: Klemmfeder
- 21: Federschenkel
- 22: Kontaktkerbe
- 23: Ausnehmungen
- 26: Kontaktarme
- 30: Elektr. Installationsgerät
- 31: Sockel
- 32: Sockelunterteil
- 33: Sockeloberteil
- 34: Schaltwippe
- 36: Kontaktwippe
- 37: Tragring
- 38: Lösehebel
- 39: Kontaktaufnahmeöffnung

## Patentansprüche

1. Leiterklemmvorrichtung (1) zur klemmenden Kontaktierung mindestens eines mehrdrähtigen elektrischen Leiters (2), umfassend ein Kontaktgehäuse (4) mit einem Gehäuseboden (6) und an seinen Bodenlängsrändern (7) angeformten Gehäusewänden (8), die an ihren freien Enden Abwinklungen (9) aufweisen, wobei die Abwinklungen (9) derart ausgebildet sind, dass an jeder Abwinklung (9) ein in Einsteckrichtung (X) des mehrdrähtigen elektrischen Leiters (2) vorderer Einsteckbereich (11) und ein sich daran anschließender Klemmbereich (12) ausgebildet sind, wobei im Einsteckbereich (11) und im Klemmbereich (12) die jeweiligen Abwinklungen (9) derart geformt sind, dass für den eingesteckten mehrdrähtigen elektrischen Leiter (2) eine Leiteranlage ausgebildet ist, die im Querschnitt gesehen V-förmig ist, und zwei in Leiterlängsrichtung verlaufende Anlagebereiche (14) für den mehrdrähtigen elektrischen Leiter (2) ausgebildet sind, und im Bereich des Klemmbereiches (12) am Gehäuseboden (6) eine Klemmfeder (19) befestigt ist, die mindestens einen vom Gehäuseboden (6) abstehenden Federschenkel (21) aufweist, so dass der eingesteckte mehrdrähtige elektrische Leiter (2) durch die Federkraft der Klemmfeder (19) gegen seine Leiteranlage gedrückt werden kann, wobei sich an den Klemmbereich (12) ein in Einsteckrichtung (X) hinterer Endbereich (13) anschließt und dieser eine Leiteranlage aufweist, die in ihrer Querschnittsform an die V-förmige Leiteranlage des Einsteckbereiches (11) angepasst ist, wobei die V-förmigen Abwinklungen (9) im Einsteckbereich (11), im Klemmbereich (12) und im Endbereich (13) aus zwei V-Schenkeln (16, 17) gebildet sind, die einen Winkel ≥ 90° einschließen, wobei ein maximal zulässiger Durchmesser derjenige Durchmesser ist, der für einen für die jeweilige Leiterklemmvorrichtung (1) zugelassenen Durchmesserbereich des elektrischen Leiters festgelegt ist, wobei dieser Durchmesserbereich einen minimalen Durchmesser und einen maximalen Durchmesser definiert, wobei der maximale Durchmesser durch den Abstand eines am freien Ende der Abwinklung (9) angeformten Verlängerungsabschnitts (18) zu der mit der Abwinklung verbundenen Gehäusewand (8) bestimmt ist, wobei der gegenseitige Abstand der Enden der V-Schenkel (16, 17) im Bereich des Einsteckbereiches und des Klemmbereiches einen Abstand aufweist, der gleich dem maximal zulässigen Durchmesser des mehrdrähtigen elektrischen Leiters (2) ist und wobei der gegenseitige Abstand der Enden der V-Schenkel (16, 17) im Endbereich (13) einen Abstand aufweist, der größer dem maximal zulässigen Durchmesser des mehrdrähtigen elektrischen Leiters ist, und die Abwinklungen (9) im Endbereich (13) an ihrem freistehenden Ende derart verlängert ausgebildet sind, dass sich im Endbereich (13) die Abwinklungen (9) in Richtung des Gehäusebodens (6) mindestens über die Hälfte der Höhe des eingesteckten und geklemmten mehrdrähtigen elektrischen Leiters (2) mit maximal zulässigem Durchmesser erstrecken, wobei der im Endbereich (13) an der Abwinklung (9) angeformte Verlängerungsabschnitt (18) parallel zu den Gehäusewänden (8) und in Richtung des Gehäusebodens (6) und in einem Abstand größer dem maximal zulässigen Durchmesser des mehrdrähtigen elektrischen Leiters (2) verläuft, wobei mindestens über die Hälfte des Durchmesserbereichs des mehrdrähtigen elektrischen Leiters (2) im Endbereich (13) eine seitliche Führung derart vorhanden ist, dass eine Verschiebung der einzelnen Leiterdrähte bzw. Leiterlitzen in Richtung auf den benachbarten elektrischen Leiter verhindert wird und dass sichergestellt ist, dass aufgrund der im Klemmbereich (12) wirkenden Anpresskraft auf den mehrdrähtigen elektrischen Leiter (2) sich dieser nicht im Endbereich (13) aufgrund einer Verschiebung der einzelnen Leiterdrähte bzw. Leiterlitzen auffächern kann.

2. Leiterklemmvorrichtung (1) nach Anspruch 1,
**dadurch gekennzeichnet, dass** die zwei V-Schenkel (16, 17) einen Winkel von 90° einschließen.

3. Leiterklemmvorrichtung (1) nach Anspruch 1 oder 2,
**dadurch gekennzeichnet, dass** der jeweilige Verlängerungsabschnitt (18) im Endbereich (13) derart ausgebildet ist, dass er sich in Richtung des Gehäusebodens (6) mindestens über die Hälfte der Höhe eines eingeführten und geklemmten Leiters mit maximal zulässigem Durchmesser erstreckt.

4. Leiterklemmvorrichtung (1) nach einem der Ansprüche 1 bis 3,
**dadurch gekennzeichnet, dass** im Bereich des Klemmbereichs (12) am freien Ende der Abwinklung (9) eine randoffene Ausnehmung (23) derart ausgebildet ist, dass der jeweilige Federschenkel (21) der Klemmfeder (19) den eingesteckten mehrdrähtigen elektrischen Leiter (2) im gesamten zulässigen Durchmesserbereich des mehrdrähtigen elektrischen Leiters (2) kontaktiert.

5. Leiterklemmvorrichtung (1) nach einem der Ansprüche 1 bis4,
**dadurch gekennzeichnet, dass** im Klemmbereich (12) oder im Übergangsbereich zwischen Einsteckbereich (11) und Klemmbereich (12) in der Abwinklung (9) eine in Richtung des Gehäusebodens (6) ragende Kontaktkerbe (22) derart ausgebildet ist, dass sie sich in den mehrdrähtigen elektrischen Leiter (2) einprägt.

6. Leiterklemmvorrichtung (1) nach einem der Ansprüche 1 bis 5,
**dadurch gekennzeichnet, dass** im Endbereich (13) am Rande des Gehäusebodens (6) ein Kontaktarm (26) angeformt ist.

7. Sockel (31) für ein elektrisches Installationsgerät (30) umfassend mindestens eine Leiterklemmvorrichtung (1) zur klemmenden Kontaktierung mindestens eines Endabschnittes eines mehrdrähtigen elektrischen Leiters (2) sowie insbesondere einem mit dem Sockel (31) verbundenen Tragring (37), wobei im Bereich der Leiterklemmvorrichtung (1) mindestens ein Lösehebel (38) derart schwenkbeweglich mit dem Sockel (31) verbunden ist, dass durch ein Verschwenken des Lösehebels (38) mittels eines an diesem angeformten Fortsatzes die klemmende Wirkung der Leiterklemmvorrichtung (1) aufgehoben wird,
**gekennzeichnet durch** eine Ausbildung der Leiterklemmvorrichtung (1) gemäß einem der Ansprüche 1 bis 6.

8. Sockel (31) nach Anspruch 7,
**dadurch gekennzeichnet, dass** der Sockel (31) aus einem Sockelunterteil (32) und einem mit diesem verbundenen Sockeloberteil (33) gebildet ist, und in dem Sockelunterteil (32) die Leiterklemmvorrichtungen (1) in Kontaktaufnahmeöffnungen (39) angeordnet sind.

9. Sockel (31) nach Anspruch 8,
**dadurch gekennzeichnet, dass** der Tragring (37) an dem Sockeloberteil (33) dieses umfassend befestigt ist.

10. Sockel (31) nach einem der Ansprüche 7 bis 9,
**dadurch gekennzeichnet, dass** am Sockeloberteil (33) an seiner von dem Sockelunterteil (32) abgekehrten Seite mindestens eine Schaltwippe (34) schwenkbar gelagert ist, und zwischen dem Sockeloberteil (33) und dem Sockelunterteil (32) eine Kontaktwippe (36) zur elektrischen Kontaktierung der Leiterklemmvorrichtung (1) angeordnet ist.

## Claims

1. Conductor-clamping apparatus (1) for clamping contacting of at least one multi-wired electrical conductor (2), comprising a contact housing (4) with a housing base (6) and with housing walls (8) which are formed integrally on the base longitudinal edges (7) of said housing base and which have angled portions (9) at their free ends, wherein the angled portions (9) are formed in such a way that, on each angled portion (9), there are formed a front insertion region (11) in the insertion direction (X) of the multi-wired electrical conductor (2) and an adjoining clamping region (12), wherein, in the insertion region (11) and in the clamping region (12), the respective angled portions (9) are formed in such a way that, for the inserted multi-wired electrical conductor (2), there is formed a conductor abutment which, as seen in cross section, is V-shaped, and there are formed two abutment regions (14), extending in the conductor longitudinal direction, for the multi-wired electrical conductor (2), and, in the region of the clamping region (12), there is fastened to the housing base (6) a clamping spring (19) which has at least one spring limb (21) projecting from the housing base (6), so that the inserted multi-wired electrical conductor (2) can be pushed against its conductor abutment by way of the spring force of the clamping spring (19), wherein the clamping region (12) is adjoined by a rear end region (13) in the insertion direction (X) and said end region has a conductor abutment which, in terms of its cross-sectional shape, is adapted to the V-shaped conductor abutment of the insertion region (11), wherein the V-shaped angled portions (9), in the insertion region (11), in the clamping region (12) and in the end region (13), are formed from two V limbs (16, 17) which include an angle ≥ 90°, wherein a maximum permissible diameter is that diameter which is specified for a diameter range of the electrical conductor that is permitted for the respective conductor-clamping apparatus (1), wherein said diameter range defines a minimum diameter and a maximum diameter, wherein the maximum diameter is determined by the distance of an extension portion (18) formed integrally on the free end of the angled portion (9) from the housing wall (8) connected to the angled portion, wherein the mutual distance between the ends of the V limbs (16, 17) in the region of the insertion region and of the clamping region has a distance which is equal to the maximum permissible diameter of the multi-wired electrical conductor (2), and wherein the mutual distance between the ends of the V limbs (16, 17) in the end region (13) has a distance which is greater than the maximum permissible diameter of the multi-wired electrical conductor, and, in the end region (13), the angled portions (9) are formed extended at their free ends in such a way that, in the end region (13), the angled portions (9) extend in the direction of the housing base (6) at least over half the height of the inserted and clamped multi-wired electrical conductor (2) with maximum permissible diameter, wherein the extension portion (18) formed integrally on the angled portion (9) in the end region (13) extends parallel to the housing walls (8) and in the direction of the housing base (6) and at a distance greater than the maximum permissible diameter of the multi-wired electrical conductor (2), wherein, at least over half the diameter range of the multi-wired electrical conductor (2), in the end region (13), provision is made of a lateral guide in such a way that displacement of the individual conductor wires or conductor stranded wires in the direction of the adjacent electrical conductor is prevented, and that it is ensured that, owing to the pressing force, acting in the clamping region (12), on the multi-wired electrical conductor (2), the latter cannot fan out in the end region (13) owing to displacement of the individual conductor wires or conductor stranded wires.

2. Conductor-clamping apparatus (1) according to Claim 1,
**characterized in that** the two V limbs (16, 17) include an angle of 90°.

3. Conductor-clamping apparatus (1) according to Claim 1 or 2,
**characterized in that** the respective extension portion (18), in the end region (13), is formed in such a way that it extends in the direction of the housing base (6) at least over half the height of an inserted and clamped conductor with maximum permissible diameter.

4. Conductor-clamping apparatus (1) according to one of Claims 1 to 3,
**characterized in that,** in the region of the clamping region (12), a cutout (23) open at its edge is formed at the free end of the angled portion (9) in such a way that the respective spring limb (21) of the clamping spring (19) is in contact with the inserted multi-wired electrical conductor (2) in the entire permissible diameter range of the multi-wired electrical conductor (2).

5. Conductor-clamping apparatus (1) according to one of Claims 1 to 4,
**characterized in that,** in the clamping region (12) or in the transition region between insertion region (11) and clamping region (12), a contact notch (22) projecting in the direction of the housing base (6) is formed in the angled portion (9) in such a way that it is impressed into the multi-wired electrical conductor (2).

6. Conductor-clamping apparatus (1) according to one of Claims 1 to 5,
**characterized in that,** in the end region (13), a contact arm (26) is formed integrally on the edge of the housing base (6).

7. Pedestal (31) for an electrical installation apparatus (30) comprising at least one conductor-clamping apparatus (1) for clamping contacting of at least one end portion of a multi-wired electrical conductor (2), and in particular a supporting ring (37) connected to the pedestal (31), wherein, in the region of the conductor-clamping apparatus (1), at least one release lever (38) is pivotably connected to the pedestal (31) in such a way that the clamping action of the conductor-clamping apparatus (1) is eliminated by way of pivoting of the releaser lever (38) by means of a projection formed integrally thereon,
**characterized by** a design of the conductor-clamping apparatus (1) according to one of Claims 1 to 6.

8. Pedestal (31) according to Claim 7,
**characterized in that** the pedestal (31) is formed from a base bottom part (32) and base top part (33) which is connected thereto, and, in the base bottom part (32), the conductor-clamping apparatuses (1) are arranged in contact-receptacle openings (39).

9. Pedestal (31) according to Claim 8,
**characterized in that** the supporting ring (37) is fastened to the pedestal top part (33) so as to surround it.

10. Pedestal (31) according to one of Claims 7 to 9,
**characterized in that** at least one rocker switch (34) is pivotably mounted on the pedestal top part (33) on that side of the latter facing away from the base bottom part (32), and a contact rocker (36) for electrical contacting of the conductor-clamping apparatus (1) is arranged between the pedestal top part (33) and the pedestal bottom part (32).

## Revendications

1. Dispositif de serrage de conducteur (1) pour la mise en contact par serrage d'au moins un conducteur électrique multifilaire (2), comprenant un boîtier de contact (4) avec un fond de boîtier (6) et des parois de boîtier (8) formées sur ses bords longitudinaux de fond (7), qui présentent des coudes (9) à leurs extrémités libres, les coudes (9) étant réalisés de telle sorte que sur chaque coude (9) sont réalisées une zone d'enfichage (11) avant dans la direction d'enfichage (X) du conducteur électrique multifilaire (2) et une zone de serrage (12) qui s'y raccorde ; dans la zone d'enfichage (11) et dans la zone de serrage (12), les coudes (9) respectifs étant formés de telle sorte que, pour le conducteur électrique multifilaire (2) enfiché, il est réalisé un appui de conducteur qui, vu en coupe transversale, est en forme de V, et deux zones d'appui (14) s'étendant dans la direction longitudinale du conducteur sont réalisées pour le conducteur électrique multifilaire (2), et dans la zone de la zone de serrage (12), un ressort de serrage (19) étant fixé au fond de boîtier (6), lequel présente au moins une branche de ressort (21) faisant saillie du fond de boîtier (6), de telle sorte que le conducteur électrique multifilaire (2) enfiché peut être pressé contre son appui de conducteur par la force de ressort du ressort de serrage (19), une zone d'extrémité (13) arrière dans la direction d'enfichage (X) se raccordant à la zone de serrage (12) et celle-ci présentant un appui de conducteur, dont la forme en coupe transversale est adaptée à l'appui de conducteur en forme de V de la zone d'enfichage (11), les coudes en forme de V (9) dans la zone d'enfichage (11), dans la zone de serrage (12) et dans la zone d'extrémité (13) étant formés par deux branches de V (16, 17) qui forment un angle ≥ 90°, un diamètre maximal admissible étant le diamètre qui est établi pour une plage de diamètres du conducteur électrique autorisée pour le dispositif de serrage de conducteur (1) respectif, cette plage de diamètres définissant un diamètre minimal et un diamètre maximal, le diamètre maximal étant déterminé par la distance d'une section de prolongement (18) formée à l'extrémité libre du coude (9) par rapport à la paroi de boîtier (8) reliée au coude, la distance mutuelle des extrémités des branches de V (16, 17) dans la zone de la zone d'enfichage et de la zone de serrage présentant une distance qui est égale au diamètre maximal admissible du conducteur électrique multifilaire (2) et la distance mutuelle des extrémités des branches de V (16, 17) dans la zone d'extrémité (13) présentant une distance qui est supérieure au diamètre maximal admissible du conducteur électrique multifilaire, et les coudes (9) étant réalisés dans la zone d'extrémité (13) sous forme prolongée à leur extrémité libre de telle sorte que dans la zone d'extrémité (13), les coudes (9) s'étendent en direction du fond de boîtier (6) au moins sur la moitié de la hauteur du conducteur électrique multifilaire (2) enfiché et serré avec le diamètre maximal admissible, la section de prolongement (18) formée dans la zone d'extrémité (13) sur le coude (9) s'étendant parallèlement aux parois de boîtier (8) et en direction du fond de boîtier (6) et à une distance supérieure au diamètre maximal admissible du conducteur électrique multifilaire (2), un guidage latéral étant présent dans la zone d'extrémité (13) sur au moins la moitié de la plage de diamètres du conducteur électrique multifilaire (2) de manière à empêcher un déplacement des fils conducteurs ou torons conducteurs individuels en direction du conducteur électrique adjacent et de manière à assurer qu'en raison de la force de pression agissant dans la zone de serrage (12) sur le conducteur électrique multifilaire (2), celui-ci ne peut pas se déployer dans la zone d'extrémité (13) en raison d'un déplacement des fils conducteurs ou torons conducteurs individuels.

2. Dispositif de serrage de conducteur (1) selon la revendication 1,
**caractérisé en ce que** les deux branches de V (16, 17) forment un angle de 90°.

3. Dispositif de serrage de conducteur (1) selon la revendication 1 ou 2,
**caractérisé en ce que** la section de prolongement (18) respective est réalisée dans la zone d'extrémité (13) de telle sorte qu'elle s'étend en direction du fond de boîtier (6) au moins sur la moitié de la hauteur d'un conducteur introduit et serré avec un diamètre maximal admissible.

4. Dispositif de serrage de conducteur (1) selon l'une quelconque des revendications 1 à 3,
**caractérisé en ce que** dans la zone de la zone de serrage (12), à l'extrémité libre du coude (9), un évidement (23) ouvert sur le bord est réalisé de telle sorte que la branche de ressort (21) respective du ressort de serrage (19) entre en contact avec le conducteur électrique multifilaire (2) enfiché dans toute la plage de diamètres admissibles du conducteur électrique multifilaire (2).

5. Dispositif de serrage de conducteur (1) selon l'une quelconque des revendications 1 à 4,
**caractérisé en ce que** dans la zone de serrage (12) ou dans la zone de transition entre la zone d'enfichage (11) et la zone de serrage (12), une encoche de contact (22) faisant saillie en direction du fond de boîtier (6) est réalisée dans le coude (9) de telle sorte qu'elle s'imprime dans le conducteur électrique multifilaire (2).

6. Dispositif de serrage de conducteur (1) selon l'une quelconque des revendications 1 à 5,
**caractérisé en ce qu'**un bras de contact (26) est formé dans la zone d'extrémité (13) au bord du fond de boîtier (6) .

7. Socle (31) pour un appareil d'installation électrique (30) comprenant au moins un dispositif de serrage de conducteur (1) pour la mise en contact par serrage d'au moins une section d'extrémité d'un conducteur électrique multifilaire (2) ainsi que notamment un anneau porteur (37) relié au socle (31) ; dans la zone du dispositif de serrage de conducteur (1), au moins un levier de desserrage (38) étant relié au socle (31) de manière mobile en pivotement de telle sorte qu'un pivotement du levier de desserrage (38) au moyen d'un appendice formé sur celui-ci supprime l'effet de serrage du dispositif de serrage de conducteur (1),
**caractérisé par** une réalisation du dispositif de serrage de conducteur (1) selon l'une quelconque des revendications 1 à 6.

8. Socle (31) selon la revendication 7,
**caractérisé en ce que** le socle (31) est formé d'une partie inférieure de socle (32) et d'une partie supérieure de socle (33) reliée à celle-ci, et dans la partie inférieure de socle (32), les dispositifs de serrage de conducteur (1) sont agencés dans des ouvertures de réception de contact (39).

9. Socle (31) selon la revendication 8,
**caractérisé en ce que** l'anneau porteur (37) est fixé à la partie supérieure de socle (33) en entourant celle-ci .

10. Socle (31) selon l'une quelconque des revendications 7 à 9,
**caractérisé en ce qu'**au moins une bascule de commutation (34) est montée pivotante sur la partie supérieure de socle (33) sur son côté opposé à la partie inférieure de socle (32), et une bascule de contact (36) est agencée entre la partie supérieure de socle (33) et la partie inférieure de socle (32) pour la mise en contact électrique du dispositif de serrage de conducteur (1).
